# EUROPEAN PATENT APPLICATION

(11) **EP 4 513 828 A1**
(43) Date of publication of application: **26.02.2025**
(21) Application number: 23790877.7
(22) Date of filing: 23.02.2023
(51) Int. Cl.: H04L 9/32

(54) **COMMUNICATION METHOD, APPARATUS AND SYSTEM, TERMINAL, AND SERVER**

(30) Priority: 18.04.2022 CN 202210403914
(71) Applicant: Hangzhou Hikvision Digital Technology Co., Ltd., Hangzhou, Zhejiang 310051 (CN)
(72) Inventor: PU, Yina, Hangzhou, Zhejiang 310051 (CN)
(74) Representative: Epping - Hermann - Fischer
(86) International application number: PCT/CN2023/077819
(87) International publication number: WO 2023/202214

(57) **Abstract**

Embodiments of the present application provide a communication method, apparatus and system, a terminal, and a server. The method is applied to the terminal, and a client and a local service process runs at the terminal. The method comprises: after passing login authentication of the server, the client sends a session authentication information request to the server, such that the server returns first session authentication information after the local service process passes the authentication; and the local service process communicates with the server on the basis of the first session authentication information and a token maintained by the local service process. When the local service process communicates with the server each time, the local service process does not need to obtain the token from the client each time, but communicates with the server on the basis of the first session authentication information and the token maintained by the local service process, such that the communication efficiency can be improved.

## Description

The present application claims the priority to a Chinese patent application No. 202210403914.7 filed with the China National Intellectual Property Administration on April 18, 2022, and entitled "COMMUNICATION METHOD, APPARATUS AND SYSTEM, TERMINAL, AND SERVER", which is incorporated herein by reference in its entirety.

### Technical Field

The present application relates to the technical field of communication, in particular to a communication method, apparatus and system, terminal, and server.

### Background

At present, when a client communicates with a server, the client will first authenticate with the server with a user name and a password. After authentication is passed, the server will send session authentication information to the client, and the client can then communicate with the server based on the session authentication information to ensure the legitimacy of communication.

In some cases, the client may need to call a local service process to communicate with the server. When the client makes multi-process communication with the server, for each local service process, in order to ensure communication security, each local service process needs to carry a token based on the above session authentication information when communicating with the server. The token is a parameter used to prevent attacks, and the token carried by the local service process needs to be different each time it communicates with the server.

In this way, when performing multi process communication, each local service process needs to obtain a token from the client each time it communicates with the server. The client assigns a different token to the local service process each time. The process is cumbersome and has a low communication efficiency.

### Summary

Embodiments of the present application aim to provide a communication method, apparatus and system, terminal, and server, to improve the communication efficiency. The specific technical solutions are as follows:
In a first aspect, an embodiment of the present application provides a communication method applied to a terminal, the terminal running a client and a local service process, the method comprises steps:
sending a session authentication information request to a server after the client passes login authentication of the server, such that the server returns first session authentication information after successfully authenticating the local service process;
communicating, by the local service process, with the server based on the first session authentication information and a token maintained by itself.

Optionally, the step of sending the session authentication information request to the server, comprises:
sending, by the local service process, the session authentication information request carrying a user name and a password to the server, such that the server returns the first session authentication information to the local service process after successfully authenticating the user name and the password.

Optionally, the step of sending the session authentication information request to the server, comprises:
sending, by the client, the session authentication information request to the server based on second session authentication information, such that the server generates the first session authentication information after successfully verifying the second session authentication information, and returns the first session authentication information to the client, wherein the second session authentication information is session authentication information generated by the server after performing the login authentication on the client; the client communicates with the server based on the second session authentication information, and the second session authentication information is different from the first session authentication information;
after the step of sending the session authentication information request to the server, the method further comprises:
   receiving, by the client, the first session authentication information returned by the server and sending the first session authentication information to the local service process.

Optionally, the method further comprises:
sending, by the client, a first destruction instruction to the server such that the server destroys the first session authentication information and the second session authentication information; wherein, the first destruction instruction is configured to instruct destruction of the second session authentication information; or,
sending, by the client, a second destruction instruction to the server and the local service process such that the server destroys the first session authentication information; the local service process receives the second destruction instruction and destroys the first session authentication information, wherein the second destruction instruction is configured to instruct destruction of the first session authentication information.

Optionally, the method further comprises:
receiving, by the client, a third destruction instruction sent by the server, destroying the second session authentication information and the first session authentication information; wherein the third destruction instruction is configured to instruct destruction of the second session authentication information; or,
receiving, by the client, a fourth destruction instruction sent by the server, destroying the first session authentication information; wherein the fourth destruction instruction is configured to instruct destruction of the first session authentication information.

Optionally, the step of destroying the second session authentication information and the first session authentication information, comprises:
determining, based on a pre-recorded corresponding relationship between the second session authentication information and the first session authentication information, the first session authentication information corresponding to the second session authentication information instructed by the third destruction instruction, and destroying the second session authentication information and the determined first session authentication information.

Optionally, the first session authentication information is generated by the server after successfully verifying the second session authentication information, based on the second session authentication information according to a preset session authentication information generation rule;
the step of destroying the second session authentication information and the first session authentication information, comprises:
searching for the first session authentication information that conforms to the preset session authentication information generation rule with the second session authentication information instructed by the third destruction instruction, and destroying the second session authentication information and the searched first session authentication information.

Optionally, there are multiple local service processes;
each of the local service processes communicates with the server based on different first session authentication information.

In a second aspect, an embodiment of the present application provides a communication method applied to a server, the method comprises steps:
receiving a session authentication information request sent by a terminal, wherein the terminal runs a client and a local service process, and the session authentication information request is sent by the terminal after the client passes login authentication of the server;
sending first session authentication information to the terminal after successfully authenticating the local service process, such that the local service process communicates with the server based on the first session authentication information and a token maintained by itself.

Optionally, the step of receiving the session authentication information request sent by the terminal, comprises:
receiving the session authentication information request carrying a user name and a password sent by the local service process;
the step of sending the first session authentication information after successfully authenticating the local service process, comprises:
   sending the first session authentication information to the local service process after successfully authenticating the user name and the password.

Optionally, the step of receiving the session authentication information request sent by the terminal, comprises:
receiving the session authentication information request sent by the client based on second session authentication information, wherein the second session authentication information is session authentication information generated by the server after performing the login authentication on the client; the client communicates with the server based on the second session authentication information;
the step of sending the first session authentication information to the terminal after successfully authenticating the local service process, comprises:
   verifying the second session authentication information and generating the first session authentication information after successfully verifying the second session authentication information, wherein the first session authentication information is different from the second session authentication information;
   sending the first session authentication information to the client, such that the client receives the first session authentication information and sends the first session authentication information to the local service process.

Optionally, the method further comprises steps:
receiving a first destruction instruction sent by the client; destroying the first session authentication information and the second session authentication information; wherein the first destruction instruction is configured to instruct destruction of the second session authentication information; or,
receiving a second destruction instruction sent by the client; destroying the first session authentication information; wherein the second destruction instruction is configured to instruct destruction of the first session authentication information.

Optionally, the step of destroying the first session authentication information and the second session authentication information, comprises:
determining, based on a pre-recorded corresponding relationship between the second session authentication information and the first session authentication information, the first session authentication information corresponding to the second session authentication information instructed by the first destruction instruction, and destroying the second session authentication information and the determined first session authentication information.

Optionally, the first session authentication information is generated after successfully verifying the second session authentication information, based on the second session authentication information according to a preset session authentication information generation rule;
the step of destroying the first session authentication information and the second session authentication information, comprises:
searching for the first session authentication information that conforms to the preset session authentication information generation rule with the second session authentication information instructed by the first destruction instruction, and destroying the second session authentication information and the determined first session authentication information.

Optionally, the method further comprises:
sending a third destruction instruction to the client, such that the client destroys the second session authentication information and the first session authentication information, wherein the third destruction instruction is configured to instruct destruction of the second session authentication information; or,
sending a fourth destruction instruction to the client, such that the client destroys the first session authentication information, wherein the fourth destruction instruction is configured to instruct destruction of the first session authentication information.

Optionally, there are multiple local service processes;
the server communicates with each of the local service processes based on different first session authentication information.

In a third aspect, an embodiment of the present application provides a communication apparatus applied to a terminal, the terminal running a client and a local service process, the apparatus comprises:
a first sending module, configured for sending a session authentication information request to a server after the client passes login authentication of the server, such that the server returns first session authentication information after successfully authenticating the local service process;
a first communication module, configured for communicating, by the local service process, with the server based on the first session authentication information and a token maintained by itself.

In a fourth aspect, an embodiment of the present application provides a communication apparatus applied to a server, the apparatus comprises:
a first receiving module, configured for receiving a session authentication information request sent by a terminal, wherein the terminal runs a client and a local service process, and the session authentication information request is sent by the terminal after the client passes login authentication of the server;
a second sending module, configured for sending first session authentication information to the terminal after successfully authenticating the local service process, such that the local service process communicates with the server based on the first session authentication information and a token maintained by itself.

In a fifth aspect, an embodiment of the present application provides a communication system comprising a terminal and a server, the terminal running a client and a local service process, wherein:
the terminal is configured for performing steps in any of the methods described in the first aspect above;
the server is configured for performing steps in any of the methods described in the second aspect above.

In a sixth aspect, an embodiment of the present application provides a terminal comprising a processor, a communication interface, a memory, and a communication bus, wherein the processor, the communication interface, and the memory communicate with each other via the communication bus;
the memory is configured for storing a computer program;
the processor is configured for implementing steps in any of the methods described in the first aspect above when executing programs stored on the memory.

In a seventh aspect, an embodiment of the present application provides a server, comprising a processor, a communication interface, a memory, and a communication bus, wherein the processor, the communication interface, and the memory communicate with each other via the communication bus;
the memory is configured for storing a computer program;
the processor is configured for implementing steps in any of the methods described in the second aspect above when executing programs stored on the memory.

In a eighth aspect, an embodiment of the present application provides a computer-readable storage medium having a computer program stored thereon, and the computer program, when executed by a processor, implements steps in any of the methods described in the first or the second aspect above.

In a ninth aspect, an embodiment of the present application provides a computer program product containing instructions which, when running on a computer, causes the computer to execute steps in any of the methods described in the first or the second aspect above.

The beneficial effects of the embodiments of the present application are as follows:
In the solution provided in the embodiment of the present application, after the client passes the login authentication of the server, the client sends a session authentication information request to the server to cause the server returns first session authentication information after successfully authenticating the local service process, the local service process communicates with the server based on the first session authentication information and a token maintained by itself. By using the above solution, when communicating with the server, the local service process does not need to obtain a token from the client each time, but communicates with the server based on the first session authentication information and the token maintained by itself. Compared with the current solution for the local service process to communicate with the server, the communication process is simple and the communication efficiency is improved. Of course, any product or method implementing the present application does not necessarily require simultaneously achieving all the advantages mentioned above.

### Brief Description of the Drawings

The drawings described here are intended to provide a further understanding of the present application and form a part of it. The illustrative embodiments of the present application and the explanations of which are used to explain the present application and do not constitute an improper limitation of the present application.
Figure 1 is a flowchart of a first communication method provided by an embodiment of the present application;
Figure 2 is a flowchart of a client sending a session authentication information request method based on the embodiment shown in Figure 1;
Figure 3 is a flowchart of a second communication method provided by an embodiment of the present application;
Figure 4 is a signaling interaction diagram of the communication method provided by the embodiment of the present application;
Figure 5 is a schematic structure diagram of a first communication apparatus provided by an embodiment of the present application;
Figure 6 is a schematic structure diagram of a second communication apparatus provided by an embodiment of the present application;
Figure 7 is a schematic structure diagram of a communication system provided by an embodiment of the present application;
Figure 8 is a schematic structure diagram of a terminal provided by an embodiment of the present application;
Figure 9 is a schematic structure diagram of a server provided by an embodiment of the present application;

### Detailed Description

In order to make the purpose, technical solutions, and advantages of the present application clearer, the present application is further described in detail with reference to the accompanying drawings and embodiments. Obviously, the described embodiments are only a part of the embodiments of the present application, not all of them. Based on the embodiments in the present application, all other embodiments acquired by ordinary technical personnel in the art without making creative effort shall fall within the protection scope of the present application.

In order to improve communication efficiency, the embodiments of the present application provide a communication method, an apparatus, a system, a terminal, a server, a computer-readable storage medium, and a computer program product.

For the convenience of understanding the solutions provided by the embodiments of the present application, terms involved in the present application will be introduced first in the following:
Session authentication information: authentication information used in the communication process between the terminal and the server to ensure the legitimacy of network requests.

Token: one parameter for preventing attacks carried in a network request when a client or a local service process sends the network request to a server; the token carried in the network request will be changed each time the client or local service process sends a network request to the server.

WebSocket: a protocol for full duplex communication over a single TCP (Transmission Control Protocol) connection, which simplifies a data exchange between a client and a server and allows the server to actively push data to the client. In the WebSocket API (Application Programming Interface), the client and server only need to complete a handshake once to create a persistent connection between them and perform bidirectional data transmission.

The first communication method provided in the embodiment of the present application can be applied to any terminal that needs to communicate with a server, such as a mobile phone, a computer, a tablet, etc. The terminal runs a client and a local service processes, and the client can be an application or web browser installed on the terminal, without specific limitations.

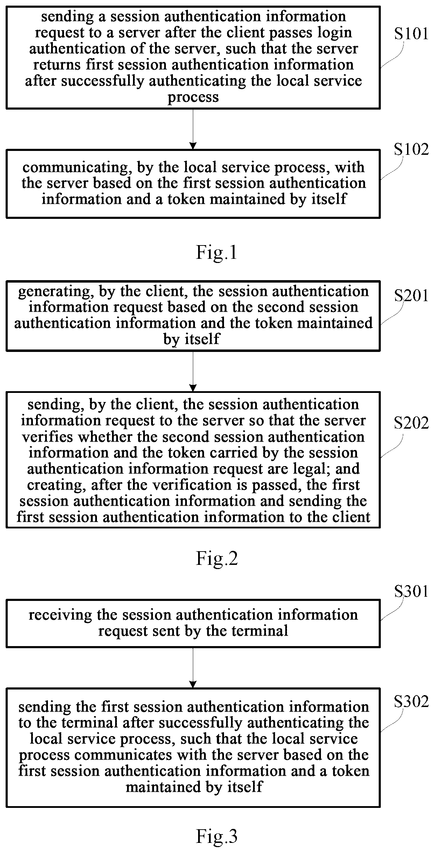

As shown in figure 1, there is a communication method applied to a terminal, wherein the terminal runs a client and a local service process, the method comprises:
S101, sending a session authentication information request to a server after the client passes login authentication of the server, such that the server returns first session authentication information after successfully authenticating the local service process;
S 102, communicating, by the local service process, with the server based on the first session authentication information and a token maintained by itself.

It can be seen that in the solution provided in the embodiment of the present application, after the client passes the login authentication of the server, the client sends a session authentication information request to the server to cause the server returns first session authentication information after successfully authenticating the local service process, the local service process communicates with the server based on the first session authentication information and a token maintained by itself. By using the above solution, when communicating with the server, the local service process does not need to obtain a token from the client each time, but communicates with the server based on the first session authentication information and the token maintained by itself. Compared with the current solution for the local service process to communicate with the server, the communication process is simple and the communication efficiency is improved.

When a user wants to open the client to watch network content, he/she can input the user's account information, namely a user name and a password, in a login interface displayed on the client. Then, the client can generate a login request based on a communication protocol and send the login request to the server. Wherein the login request carries a user name and password therein.

Wherein the communication protocol can be WebSocket, of course, it can also be File Transfer Protocol, Hypertext Transfer Protocol, etc., without specific limitations here.

For example, when a user wants to view photos stored in Cloud Drive A through the client, the user can enter a user name and a password in a login interface of the Cloud Drive A displayed on the client. The client can then generate a login request and send the login request carrying the user name and the password to a server corresponding to the Cloud Drive A.

After receiving the login request, the server can perform login authentication based on the user name and the password carried in the login request. In an implementation, the server can verify whether the user name and the password carried in the login request match with a stored user name and a stored password provided by the user during registration. If they match, it can be determined that the login authentication is passed and the user login is successful; if they do not match, it can be determined that the authentication is not passed and the user login has failed.

In some cases, the client may need to call one or more local service processes to communicate with the server. For example, when a user performs a multi-window video playback operation, the video content played in each playback window can be obtained from the server through one local service process. In order to achieve communication between the local service process and the server, after the client passes the login authentication of the server, the client or local service process can send a session authentication information request to the server. After receiving the session authentication information request, the server can authenticate the local service process and return the first session authentication information after the authentication is passed. Wherein the first session authentication information can be authentication information such as strings, which is not specifically limited here.

Furthermore, as the local service process has already passed the authentication of the server, the local service process can communicate separately with the server. Specifically, the local service process can communicate with the server based on the first session authentication information and the token maintained by itself.

Wherein the token maintained by the local service process itself is a token generated by the local service process itself based on a certain rule, rather than a token obtained from the client. For example, in the local service process, one number can be selected from 1 to 200 in order as the token on which this communication is based. Assuming a token on which the previous communication with the server was based is 1, then the token on which this communication is based can be 2.

If there are multiple local service processes communicating with the server, each local service process can communicate with the server based on different first session authentication information. Since each local service process communicates with the server based on different first session authentication information, each local service process can maintain the token by itself without obtaining a different token from the client each time. Different local service processes can communicate with the server based on the same token or can communicate with the server based on different tokens, which will not affect the smooth progress of communication.

As an implementation of the embodiment of the present application, the step of sending the session authentication information request to the server can comprise:
sending, by the local service process, the session authentication information request carrying a user name and a password to the server, such that the server returns the first session authentication information to the local service process after successfully authenticating the user name and the password.

After the client passes the login authentication of the server, the local service process can send the session authentication information request carrying a user name and a password to the server; after receiving the session authentication information request, the server can authenticate the user name and the password carried in the session authentication information request; after the authentication of the user name and the password is passed, it means that the local service process has communication authority, and the server can return the first session authentication information to the local service process.

Then, the local service process can communicate with the server based on the first session authentication information and a token maintained by the local service process itself.

It can be seen that, in this embodiment, the local service process can send a session authentication information request carrying a user name and a password to the server, then, the server can authenticate the user name and the password, and return, after the authentication is passed, the first session authentication information to the local service process. In this way, the local service process can obtain the first session authentication information from the server through the authentication of user name and password. Subsequently, the local service process does not need to request a token from the client, but can communicate with the server based on the first session authentication information and the token maintained by itself.

As an implementation of the embodiment of the present application, the step of sending the session authentication information request to the server, can comprise:
sending, by the client, the session authentication information request to the server based on second session authentication information, such that the server generates the first session authentication information after successfully verifying the second session authentication information, and returns the first session authentication information to the client.

After the authentication of client is passed, the server can return the second session authentication information to the client, where the second session authentication information is the authentication information generated by the server after the authentication of the user name and the password is passed, that is, the second session authentication information can identify the legitimacy of the login status of the currently logged-in user.

Then, the client can receive the second session authentication and send a session authentication information request to the server based on the second session authentication information, so that the server can generate the first session authentication information after successfully verifying the second session authentication information, and return the first session authentication information. Wherein the second session authentication information is session authentication information generated by the server after performing login authentication on the client. The client communicates with the server based on the second session authentication information, while the local service process communicates with the server based on the first session authentication information. The second session authentication information is different from the first session authentication information. Each first session authentication information is used to identify the legitimacy of its corresponding local service process.

Correspondingly, after the step of sending the session authentication information request to the server, the method can further comprise:
receiving, by the client, the first session authentication information returned by the server and sending the first session authentication information to the local service process.

After receiving the first session authentication information returned by the server, the client can send the first session authentication information to the local service process. After receiving the first session authentication information, the local service process can communicate with the server based on the first session authentication information and the token maintained by the local service process itself. In this way, when the client calls the local service process to communicate with the server, there is no need to authenticate the user name and the password separately for each local service process, which can improve communication efficiency.

In one implementation, when multiple local service processes are needed to communicate with the server, the client can apply for first session authentication information from the server for each local service process separately. Then, the client can send different first session authentication information to different local service processes, and each local service process can communicate with the server respectfully based on the received first session authentication information.

It can be seen that, in this embodiment, the client and the server only need to authenticate once based on the user name and password, so that different local service processes can communicate with the server independently, which can further improve the communication efficiency.

In one implementation, in the process of communication connection between the client and the server, in order to ensure the security of communication, each session authentication information has an expiration time. For example, if the second session authentication information is not used for more than ten minutes, the second session authentication information will become invalid, and its corresponding first session authentication information will also become invalid.

The first session authentication information and the second session authentication information provided in this embodiment may have an inheritance relationship, that is, the second session authentication information can be referred to as main session authentication information, and the first session authentication information can be referred to as sub session authentication information. Specifically, a terminal and a server can preset a following rule: each session authentication information, no matter the main session authentication information or the sub session authentication information, will have an expiration time. When the session authentication information is not used within a preset duration, the session authentication information will become invalid; if the main session authentication information is always alive, the sub session authentication information corresponding to the main session authentication information will not become invalid; if one or more sub session authentication information is always used, i.e. alive, the main session authentication information will not become invalid. The number of the sub session authentication information inherited from the main session authentication information can have an upper limit, for example, it can be 3, 5, 8, etc. There is no specific limit here.

As an implementation of the embodiment of the present application, as shown in figure 2, the above step of sending, by the client, the session authentication information request to the server based on second session authentication information, can comprise: S201, generating, by the client, the session authentication information request based on the second session authentication information and the token maintained by itself;

The token maintained by the client itself is the authentication parameter maintained by the client based on the communication protocol with the server. After the client receives the second session authentication information returned by the server, the client can determine the authentication parameter for communicating with the server based on a range of token pre-negotiated with the server, that is, the token maintained by itself. The client can generate the session authentication information request based on the second session authentication information and this token.

The token maintained by the client itself is an authentication parameter carried in the data request that can prevent attacks. Every time the client communicates with the server, the token carried in the communication request will change. Wherein the data request or communication request is the network request mentioned in the above content.

For example, the range of token pre-negotiated by the client and server is 1 to 300, so the above token maintained itself can be 1. When the client sends a communication request to the server again, the token used can be 2, and so on. Each time a communication request is sent to the server, the token used can be increased by 1.

S202, sending, by the client, the session authentication information request to the server so that the server verifies whether the second session authentication information and the token carried by the session authentication information request are legal; and creating, after the verification is passed, the first session authentication information and sending the first session authentication information to the client.

After generating the session authentication information request, the client can send the session authentication information request to the server. After receiving the session authentication information request, the server can verify whether the second session authentication information and the token carried in the session authentication information request are legal.

As an implementation, after receiving the session authentication information request, the server can verify whether the second session authentication information carried in the session authentication information request is consistent with the second session authentication information generated by the server itself after the login authentication of the client is passed. If they are consistent, it is determined that the second session authentication information carried in the session authentication information request is legal. At the same time, the server can also verify whether the token carried in the session authentication information request belongs to the range of token pre-negotiated with the client, and whether it is a duplicate of the token carried in the network request previously sent by the client. If the token belongs to the range of token pre-negotiated with the client and is not a duplicate of the token carried in the network request previously sent by the client, it can be determined that the second session authentication information and the token carried in the session authentication information request are legal.

After the verification is passed, the server can create the first session authentication information and then send the same to the client. The first session authentication information and its corresponding second session authentication information have the same authentication capability, that is, both can identify the legitimacy of the login status of the user.

It can be seen that in this embodiment, the client can generate the session authentication information request based on the second session authentication information and the token maintained by itself, and send the session authentication information request to the server, then the server can verify whether the second session authentication information and the token carried in the session authentication information request are legal; after the verification is passed, the server can create the first session authentication information, and send the first session authentication information to the client. In this way, the client can request the first session authentication information with the same authentication capability as the second session authentication information on the premise of ensuring communication security, to ensure that the local service process can communicate legally with the server based on the first session authentication information.

As an implementation provided in the embodiment of the present application, the above method can further comprise:
sending, by the client, a first destruction instruction to the server such that the server destroys the first session authentication information and the second session authentication information; or, sending, by the client, a second destruction instruction to the server and the local service process such that the server destroys the first session authentication information; the local service process receives the second destruction instruction and destroys the first session authentication information.

In the case that a user wants to stop communication between the client and the server, or wants to stop communication between a certain process or some local service processes and the server, the client can send the destruction instruction to the server and/or the local service processes to destroy the corresponding session authentication information.

In a first case, when communication between the client and server needs to be stopped, the client can send a first destruction instruction to the server, wherein the first destruction instruction is used to instruct destruction of the second session authentication information. Since the communication between the client and the server stops, the communication between all local service processes corresponding to the client and the server also stops. Therefore, if the second session authentication information is invalid, all the first session authentication information corresponding to the second session authentication information is no longer necessary to exist. Therefore, after receiving the first destruction instruction, the server can destroy the second session authentication information and the first session authentication information corresponding to the second session authentication information. Even if the local service process sends a data request to the server based on the first session authentication information in the future, the local service process and the server cannot continue to communicate because the server has already destroyed the first session authentication information.

Of course, in this case, the client can also send a destruction instruction to each local service process. Upon receiving the destruction instruction, each local service process will destroy its corresponding first session authentication information. In this way, all session authentication information corresponding to the client will be destroyed.

In a second case, when communication between a certain local service process or some local service processes and server needs to be stopped, the client can send a second destruction instruction to the server and the local service process, wherein the second destruction instruction is used to instruct destruction of certain first session authentication information.

In an implementation, the number of the first session authentication information generally has an upper limit, so after the communication between a certain local service process or some local service processes and the server is completed, the first session authentication information corresponding to that local service process can be destroyed, so that when a new local service process needs to communicate with the server, new first session authentication information can be created smoothly.

For example, if the playback of a video corresponding to playback window A in the four video playback windows in the client interface is completed, the client can send a second destruction instruction to the server and to the local service process corresponding to playback window A at this point.

After receiving the second destruction instruction, the server and the local service process can destroy the first session authentication information instructed by the second destruction instruction.

After the second session authentication information is destroyed, if the client sends a network request carrying the second session authentication information to the server, or if the local service process sends a network request carrying the first session authentication information corresponding to the second session authentication information to the server, the authentication will not be passed by the server. After the first session authentication information is destroyed, if the local service process sends a network request carrying the first session authentication information to the server, the authentication will not be passed by the server. However, at this point, the second session authentication information and other first session authentication information are still valid and can continue to be used.

It can be seen that, in this embodiment, the client can send the first destruction instruction to the server to cause the server to destroy the second session authentication information and the first session authentication information; or, the client can send the second destruction instruction to the server and the local service process to cause the server and the local service process to destroy the first session authentication information. In this way, for different cases, the client can send different destruction instructions to enable the server and/or the local service processes to destroy the corresponding session authentication information in time, which can ensure communication security and improve communication efficiency.

As an implementation provided in the embodiment of the present application, the above method can further comprise:
receiving, by the client, a third destruction instruction sent by the server, destroying the second session authentication information and the first session authentication information; or, receiving, by the client, a fourth destruction instruction sent by the server, destroying the first session authentication information.

The server can also actively send a destruction instruction to the client. In a first case, when communication between the server and the client needs to be stopped, the server can send the third destruction instruction to the client, where the third destruction instruction is used to instruct destruction of the second session authentication information. At this time, since the communication between the client and the server stops, the communication between all local service processes corresponding to the client and the server also stops. Therefore, if the second session authentication information is invalid, all the first session authentication information is no longer necessary to exist. Therefore, the server can destroy the second session authentication information and the first session authentication information.

In a second case, when communication between the a certain local service process or some local service processes and server needs to be stopped, the server can send a fourth destruction instruction to the client, wherein the fourth destruction instruction is used to instruct destruction of the first session authentication information. After receiving the fourth destruction instruction, the client can destroy the first session authentication information.

Of course, in the case of destroying the first session authentication information, the client can also send a destruction instruction to the corresponding local service process. After receiving the destruction instruction, the local service process can destroy its corresponding first session authentication information, that is, the local service process no longer communicates with the server.

It can be seen that, in this embodiment, the client can receive the third destruction instruction sent by the server for destroying the second session authentication information and the first session authentication information; or, the client can receive the fourth destruction instruction sent by the server for destroying the first session authentication information. In this way, for different cases, the server can send different destruction instructions to enable the client to destroy the corresponding session authentication information in time, which can ensure communication security and improve communication efficiency.

As an implementation provided by the embodiment of the present application, the above step of destroying the second session authentication information and the first session authentication information may comprise:
determining, based on a pre-recorded corresponding relationship between the second session authentication information and the first session authentication information, the first session authentication information corresponding to the second session authentication information instructed by the third destruction instruction, and destroying the second session authentication information and the determined first session authentication information.

In order to facilitate the subsequent management of the second session authentication information and the first session authentication information, after receiving the second session authentication information and the first session authentication information sent by the server, the client can record the corresponding relationship between the second session authentication information and the first session authentication information. For example, the client communicates with the server through session A, at the same time, there are three local service processes communicating with the server based on a session A1, a session A2, and a session A3 respectively. Therefore, the client can record the corresponding relationship between the second session authentication information and the first session authentication information as follows:

| second session authentication information | first session authentication information |
|---|---|
| session A | session A1 |
| | session A2 |
| | session A3 |

In this way, when receiving the third destruction instruction sent by the server, the client can determine the first session authentication information corresponding to the second session authentication information instructed by the third destruction instruction based on the pre-recorded corresponding relationship between the second session authentication information and the first session authentication information, and destroy the second session authentication information and the determined first session authentication information.

For example, if the second session authentication information instructed by the third destruction instruction is session A, then, based on the corresponding relationship recorded in the table above, the client can determine that the first session authentication information that needs to be destroyed includes the session A1, the session A2, and the session A3. Then, the session A, the session A1, the session A2, and the session A3 can be destroyed.

It can be seen that in this embodiment, after receiving the second session authentication information and the first session authentication information sent by the server, the client can record the corresponding relationship between the second session authentication information and the first session authentication information. In this way, when destroying the second session authentication information and the first session authentication information in the future, the first session authentication information corresponding to the second session authentication information instructed by the destruction instruction can be quickly determined based on this corresponding relationship, thereby achieving the rapid destruction of the session authentication information.

As an implementation provided by the embodiment of the present application, the first session authentication information can be generated by the server after successfully verifying the second session authentication information, based on the second session authentication information according to a preset session authentication information generation rule.

Wherein the preset session authentication information generation rule can be pre-set on both the server and client, so that the server can generate the first session authentication information according to the preset session authentication information generation rule. As an implementation, the preset session authentication information generation rule can be to add numbers to second session authentication information in the order of generation.

For example, if the second session authentication information is: 922D39266FF24883A4EDBFE4A706F31F, when the server generates the first session authentication information based on the second session authentication information according to the preset session authentication information generation rule for the first time, the first session authentication information can be generated as: 922D39266FF24883A4EDBFE4A706F31F_1; when the server generates the first session authentication information based on the second session authentication information according to the preset session authentication information generation rule for the second time, the first session authentication information can be generated as: 922D39266FF24883A4EDBFE4A706F31F_2, and so on, multiple first session authentication information can be generated.

For this case, the above step of destroying the second session authentication information and the first session authentication information can comprise:
searching for the first session authentication information that conforms to the preset session authentication information generation rule with the second session authentication information instructed by the third destruction instruction, and destroying the second session authentication information and the searched first session authentication information.

Since the first session authentication information and the corresponding second session authentication information conform to the preset session authentication information generation rule, when receiving the third destruction instruction, the client can search for the first session authentication information that conforms the preset session authentication information generation rule with the second session authentication information instructed by the third destruction instruction, and then destroy the second session authentication information and the searched first session authentication information.

It can be seen that, in this embodiment, no matter which destruction method is used, the first session authentication information and second session authentication information to be destroyed can be accurately and quickly determined.

Corresponding to the first communication method, an embodiment of the present application further provides a second communication method. The second communication method provided in the embodiment of the present application will be introduced below. The second communication method provided in the embodiment of the present application can apply to the server.

As shown in figure 3, there is a communication method applied to a server, the method can comprise:
S301, receiving a session authentication information request sent by a terminal;
wherein the terminal runs a client and a local service process, and the session authentication information request is sent by the terminal after the client passes the login authentication of the server.
S302, sending the first session authentication information to the terminal after successfully authenticating the local service process, such that the local service process communicates with the server based on the first session authentication information and a token maintained by itself.

It can be seen that in the solution provided by the embodiment of the application, the server can receive the session authentication information request sent by the terminal, and send the first session authentication information to the terminal after successfully authenticating the local service process, so that the local service process can communicate with the server based on the first session authentication information and the token maintained by itself, wherein the terminal runs the client and the local service process, and the session authentication information request is sent by the terminal after the client passes the login authentication of the server. By using the above solution, when communicating with the server, the local service process does not need to obtain a token from the client each time, but communicates with the server based on the first session authentication information and the token maintained by itself. Compared with the current solution for the local service process to communicate with the server, the communication process is simple and the communication efficiency is improved.

As an implementation of the embodiment of the present application, the above step of receiving the session authentication information request sent by the client can comprise:
receiving the session authentication information request carrying a user name and a password sent by the local service process.

Correspondingly, the above step of sending the first session authentication information after successfully authenticating the local service process can comprise:
sending the first session authentication information to the local service process after successfully authenticating the user name and the password.

As an implementation of the embodiment of the present application, the above step of receiving the session authentication information request sent by the terminal can comprise:
receiving the session authentication information request sent by the client based on the second session authentication information, wherein the second session authentication information is session authentication information generated by the server after performing the login authentication on the client; the client communicates with the server based on the second session authentication information.

Correspondingly, the above step of sending the first session authentication information to the terminal after successfully authenticating the local service process can comprise:
verifying the second session authentication information and generating the first session authentication information after successfully verifying the second session authentication information, wherein the first session authentication information is different from the second session authentication information;
sending the first session authentication information to the client, such that the client receives the first session authentication information and sends the first session authentication information to the local service process.

As an implementation of the embodiment of the present application, the above method can further comprise:
receiving a first destruction instruction sent by the client; destroying the first session authentication information and the second session authentication information; wherein the first destruction instruction is configured to instruct destruction of the second session authentication information; or,
receiving a second destruction instruction sent by the client; destroying the first session authentication information; wherein the second destruction instruction is configured to instruct destruction of the first session authentication information.

As an implementation of the embodiment of the present application, the above step of destroying the first session authentication information and the second session authentication information may comprise:
determining, based on a pre-recorded corresponding relationship between the second session authentication information and the first session authentication information, the first session authentication information corresponding to the second session authentication information instructed by the first destruction instruction, and destroying the second session authentication information and the determined first session authentication information.

As an implementation of the embodiment of the present application, the first session authentication information can be generated after successfully verifying the second session authentication information, based on the second session authentication information according to a preset session authentication information generation rule.

Correspondingly, the above step of destroying the first session authentication information and the second session authentication information can comprise:
searching for the first session authentication information that conforms to the preset session authentication information generation rule with the second session authentication information instructed by the first destruction instruction and, destroying the second session authentication information and the determined first session authentication information.

As an implementation of the embodiment of the present application, the above method can further comprise:
sending a third destruction instruction to the client, such that the client destroys the second session authentication information and the first session authentication information, wherein the third destruction instruction is configured to instruct destruction of the second session authentication information; or,
sending a fourth destruction instruction to the client, such that the client destroys the first session authentication information, wherein the fourth destruction instruction is configured to instruct destruction of the first session authentication information.

As an implementation of the embodiment of the present application, there are multiple local service processes;
the above server can communicate with each of the local service process based on different first session authentication information.

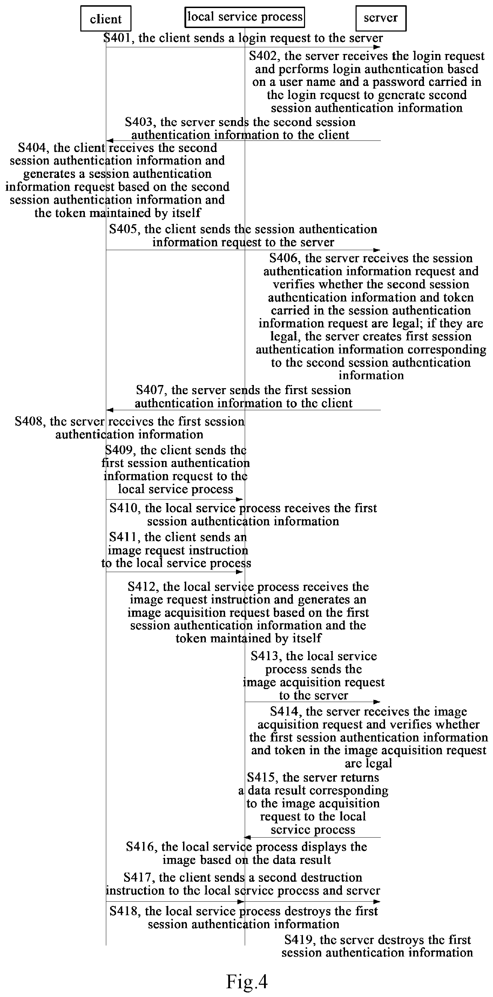

In conjunction with the signaling interaction flowchart shown in Figure 4, the communication process provided by the embodiments of the present application is below by taking a client requesting an image from a server through a local service process as an example, which may include the following steps:
S401, the client sends a login request to a server;
S402, the server receives the login request and performs login authentication based on a user name and a password carried in the login request; if the authentication is passed, second session authentication information is generated;
S403, the server sends the second session authentication information to the client;
S404, the client receives the second session authentication information and generates a session authentication information request based on the second session authentication information and a token maintained by itself;
S405 the client sends the session authentication information request to the server;
S406, the server receives the session authentication information request and verifies whether the second session authentication information and the token carried in the session authentication information request are legal; if they are legal, the server creates first session authentication information corresponding to the second session authentication information;
   wherein the first session authentication information and the second session authentication information may conform to a preset session authentication information generation rule.
S407, the server sends the first session authentication information to the client;
S408, the client receives the first session authentication information;
S409, the client sends the first session authentication information request to a local service process;
S410, the local service process receives the first session authentication information;
S411, the client sends an image request instruction to the local service process;
S412, the local service process receives the image request instruction and generates an image acquisition request based on the first session authentication information and the token maintained by itself;
S413, the local service process sends the image acquisition request to the server;
S414, the server receives the image acquisition request and verifies whether the first session authentication information and the token in the image acquisition request are legal. If yes, step S415 is performed;
S415, the server returns a data result corresponding to the image acquisition request to the local service process;
S416, the local service process displays an image based on the data result.

When it is necessary to destroy certain first session authentication information, the communication process may also include the following steps:
S417, the client sends a second destruction instruction to the local service process and the server;
   wherein the second destruction instruction is used to instruct destruction of the first session authentication information;
S418, the local service process destroys the first session authentication information;
S419, the server destroys the first session authentication information.

It can be seen that in this embodiment, the client, server, and local service process can interact through the above method, so that when the client calls the local service process to communicate with the server, especially when multi-process communication is performed, there is no need to obtain a token from the client every time. Compared with current communication connection methods, the communication process is simple and the communication efficiency is improved.

Corresponding to the above first communication method, an embodiment of the present application further provides a communication apparatus.

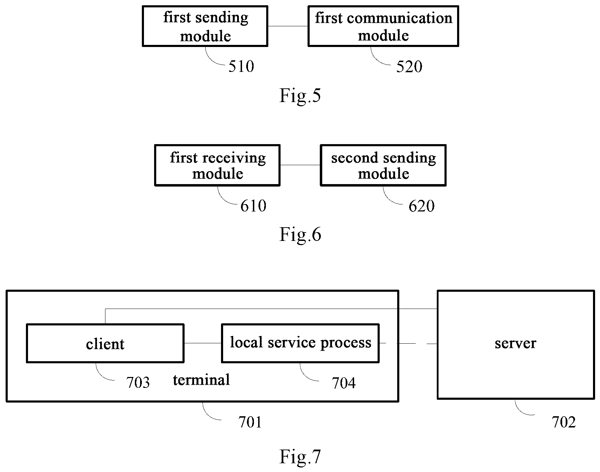

As shown in figure 5, there is a communication apparatus applied to a terminal, the terminal runs a client and a local service process, the apparatus can comprise:
a first sending module 510, configured for sending a session authentication information request to a server after the client passes login authentication of the server, such that the server returns first session authentication information after successfully authenticating the local service process;
a first communication module 520, configured for communicating, by the local service process, with the server based on the first session authentication information and a token maintained by itself.

It can be seen that in the solution provided in the embodiment of the present application, after the client passes the login authentication of the server, the client sends a session authentication information request to the server to cause the server returns first session authentication information after successfully authenticating the local service process, the local service process communicates with the server based on the first session authentication information and a token maintained by itself. By using the above solution, when communicating with the server, the local service process does not need to obtain a token from the client each time, but communicates with the server based on the first session authentication information and the token maintained by itself. Compared with the current solution for the local service process to communicate with the server, the communication process is simple and the communication efficiency is improved.

As an implementation of the embodiment of the present application, the above first sending module 510 can comprise:
a first sending unit, configured for sending, by the local service process, the session authentication information request carrying a user name and a password to the server, such that the server returns the first session authentication information to the local service process after successfully authenticating the user name and the password.

As an implementation of the embodiment of the present application, the above first sending module 510 can comprise:
a second sending unit, configured for sending, by the client, the session authentication information request to the server based on second session authentication information, such that the server generates the first session authentication information after successfully verifying the second session authentication information, and returns the first session authentication information to the client, wherein the second session authentication information is session authentication information generated by the server after performing the login authentication on the client; the client communicates with the server based on the second session authentication information, and the second session authentication information is different from the first session authentication information;
the above apparatus can further comprises:
   a second sending module, configured for, after sending the session authentication information request to the server, receiving, by the client, the first session authentication information returned by the server and sending the first session authentication information to the local service process.

As an implementation of the embodiment of the present application, the above apparatus can further comprise:
a first destruction instruction sending module, configured for sending, by the client, a first destruction instruction to the server such that the server destroys the first session authentication information and the second session authentication information; or,
configured for sending, by the client, a second destruction instruction to the server and the local service process such that the server destroys the first session authentication information; the local service process receives the second destruction instruction and destroys the first session authentication information;
wherein the first destruction instruction is configured to instruct destruction of the second session authentication information; the second destruction instruction is configured to instruct destruction of the first session authentication information.

As an implementation of the embodiment of the present application, the above apparatus can further comprise:
a first destruction module, configured for receiving, by the client, a third destruction instruction sent by the server, destroying the second session authentication information and the first session authentication information; or,
configured for receiving, by the client, a fourth destruction instruction sent by the server, destroying the first session authentication information.
wherein the third destruction instruction is configured to instruct destruction of the second session authentication information; wherein the fourth destruction instruction is configured to instruct destruction of the first session authentication information.

As an implementation of the embodiment of the present application, the above first destruction module can comprise:
a first destruction unit, configured for determining, based on a pre-recorded corresponding relationship between the second session authentication information and the first session authentication information, the first session authentication information corresponding to the second session authentication information instructed by the third destruction instruction, and destroying the second session authentication information and the determined first session authentication information.

As an implementation of the embodiment of the present application, the first session authentication information can be generated by the server after successfully verifying the second session authentication information, based on the second session authentication information according to a preset session authentication information generation rule;
the above first destruction module can comprise:
a second destruction unit, configured for, searching for the first session authentication information that conforms to the preset session authentication information generation rule with the second session authentication information instructed by the third destruction instruction, and destroying the second session authentication information and the searched first session authentication information.

As an implementation of the embodiment of the present application, there are multiple local service processes;
each of the local service processes communicates with the server based on different first session authentication information.

Corresponding to the above second communication method, an embodiment of the present application further provides another communication apparatus.

As shown in figure 6, there is a communication apparatus applied to a server, the apparatus comprises:
a first receiving module 610, configured for receiving a session authentication information request sent by a terminal;
wherein the terminal runs a client and a local service process, and the session authentication information request is sent by the terminal after the client passes the login authentication of the server;
a second sending module 620, configured for sending first session authentication information to the terminal after successfully authenticating the local service process, such that the local service process communicates with the server based on the first session authentication information and a token maintained by itself.

It can be seen that in the solution provided by the embodiment of the application, the server can receive the session authentication information request sent by the terminal, and send the first session authentication information to the terminal after successfully authenticating the local service process, so that the local service process can communicate with the server based on the first session authentication information and the token maintained by itself, wherein the terminal runs the client and the local service process, and the session authentication information request is sent by the terminal after the client passes the login authentication of the server. By using the above solution, when communicating with the server, the local service process does not need to obtain a token from the client each time, but communicates with the server based on the first session authentication information and the token maintained by itself. Compared with the current solution for the local service process to communicate with the server, the communication process is simple and the communication efficiency is improved.

As an implementation of the embodiment of the present application, the above first receiving module 610 can comprise:
a first receiving unit, configured for receiving the session authentication information request carrying a user name and a password sent by the local service process;
the above second sending module 620 is configured for:
   sending the first session authentication information to the local service process after successfully authenticating the user name and the password.

As an implementation of the embodiment of the present application, the above first receiving module 610 can comprise:
a second receiving unit, configured for receiving the session authentication information request sent by the client based on second session authentication information;
wherein the second session authentication information is session authentication information generated by the server after performing the login authentication on the client; the client communicates with the server based on the second session authentication information.
the above second sending module 620 can comprise:
   a session authentication information generation unit, configured for verifying the second session authentication information and generating the first session authentication information after successfully verifying the second session authentication information;
   wherein the first session authentication information is different from the second session authentication information;
   a session authentication information sending module, configured for sending the first session authentication information to the client, such that the client receives the first session authentication information and sends the first session authentication information to the local service process.

As an implementation of the embodiment of the present application, the above apparatus can further comprise:
a second destruction module, configured for receiving a first destruction instruction sent by the client; destroying the first session authentication information and the second session authentication information; or,
configured for receiving a second destruction instruction sent by the client; destroying the first session authentication information;
wherein the first destruction instruction is configured to instruct destruction of the second session authentication information; the second destruction instruction is configured to instruct destruction of the first session authentication information.

As an implementation of the embodiment of the present application, the above second destruction module can comprise:
a third destruction unit, configured for determining, based on a pre-recorded corresponding relationship between the second session authentication information and the first session authentication information, the first session authentication information corresponding to the second session authentication information instructed by the first destruction instruction, and destroying the second session authentication information and the determined first session authentication information.

As an implementation of the embodiment of the present application, the first session authentication information can be generated after successfully verifying the second session authentication information, based on the second session authentication information according to a preset session authentication information generation rule;
the above second destruction module can comprise:
a fourth destruction unit, configured for searching for the first session authentication information that conforms to the preset session authentication information generation rule with the second session authentication information instructed by the first destruction instruction and, destroying the second session authentication information and the determined first session authentication information.

As an implementation of the embodiment of the present application, the above apparatus can further comprise:
a second destruction instruction sending module, configured for sending a third destruction instruction to the client, such that the client destroys the second session authentication information and the first session authentication information; or,
configured for sending a fourth destruction instruction to the client, to cause the client to destroy the first session authentication information;
wherein the third destruction instruction is configured to instruct destruction of the second session authentication information; the fourth destruction instruction is configured to instruct destruction of the first session authentication information.

As an implementation of the embodiment of the present application, there are multiple local service processes;
the server communicates with each of the local service processes based on different first session authentication information.

Corresponding to the above communication method, an embodiment of the present application also provide a communication system, as shown in Figure 7, which comprising a terminal 701 and a server 702. The terminal 701 runs a client 703 and a local service process 704, wherein:
the terminal 701 is configured for performing the steps of the above first communication method;
the server 702 is configured for performing the steps of the above second communication method.

It can be seen that, in the solution provided in the embodiment of the present application, the terminal runs a client and a local service process. After the client passes the login authentication of the server, the terminal can send a session authentication information request to the server, the server can receive the session authentication information request sent by the terminal, return first session authentication information to the terminal after successfully authenticating the local service process; and the local service process communicates with the server based on the first session authentication information and a token maintained by itself. By using the above solution, when communicating with the server, the local service process does not need to obtain a token from the client each time, but communicates with the server based on the first session authentication information and the token maintained by itself. Compared with the current solution for the local service process to communicate with the server, the communication process is simple and the communication efficiency is improved.

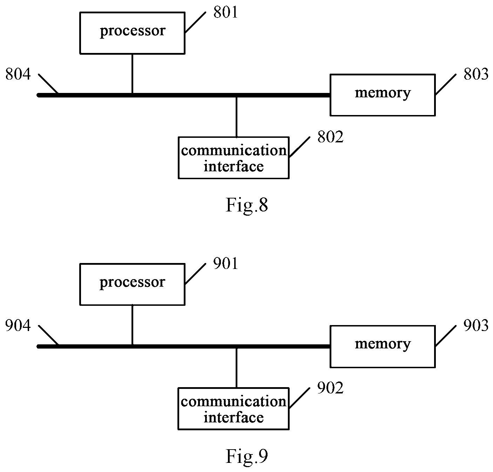

The embodiment of the present application further provides a terminal, as showing in figure 8, comprising a processor 801, a communication interface 802, a memory 803, and a communication bus 804, wherein the processor 801, the communication interface 802, and the memory 803 communicate with each other via the communication bus 804,
a memory 803, configured for storing a computer program;
the processor 801 is configured for implementing steps of the above first communication method when executing the program stored on the memory 803.

The communication bus mentioned in the above terminal can be the Peripheral Component Interconnect (PCI) standard bus or the Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface is used for the communication between the above terminal and other device.

The memory may comprise a Random Access Memory (RAM), it can also comprise a Non-Volatile Memory (NVM), such as at least one disk memory. Optionally, the memory can also be at least one storage device located far from the aforementioned processor.

The above processor can be a general-purpose processor, comprising a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

An embodiment of the present application further provides a server, as showing in figure 9, comprising a processor 901, a communication interface 902, a memory 903, and a communication bus 904, wherein the processor 901, the communication interface 902, and the memory 903 communicate with each other via a communication bus 904,
the memory 903, configured for storing a computer program;
the processor 901 is configured for implementing steps of the above second communication method when executing the program stored on the memory 903.

The communication bus mentioned in the above server can be the Peripheral Component Interconnect (PCI) standard bus or the Extended Industry Standard Architecture (EISA) bus, etc. The communication bus can be divided into an address bus, a data bus, a control bus, etc. For ease of representation, only one thick line is used in the figure, but it does not mean that there is only one bus or one type of bus.

The communication interface is used for the communication between the above server and other device.

The memory may comprise a Random Access Memory (RAM), it can also comprise a Non-Volatile Memory (NVM), such as at least one disk memory. Optionally, the memory can also be at least one storage device located far from the aforementioned processor.

The above processor can be a general-purpose processor, comprising a Central Processing Unit (CPU), a Network Processor (NP), etc.; it can also be a Digital Signal Processor (DSP), an Application Specific Integrated Circuit (ASIC), a Field-Programmable Gate Array (FPGA) or other programmable logic devices, discrete gates or transistor logic devices, or discrete hardware components.

In another embodiment of the present application, a computer-readable storage medium is also provided, the computer-readable storage medium having a computer program stored thereon, the computer program, when executed by a processor, implements the steps of the communication method according to any one of the embodiments described above.

In another embodiment of the present application, a computer program product containing instructions is also provided, which, when running on a computer, causes the computer to execute steps in the communication method according to any one of the embodiments described above.

In the above embodiment, it can be realized in whole or in part by software, hardware, firm ware or any combination thereof. When implemented in software, it can be realized in the form of a computer program product in whole or in part. The computer program product comprises one or more computer instructions. When the computer program instructions are loaded and executed on a computer, the processes or functions described in the embodiments of the present application are generated in whole or in part. The computer can be a general purpose computer, a special purpose computer, a computer network, or other programmable devices. The computer instructions can be stored in a computer-readable storage medium, or transferred from one computer-readable storage medium to another computer-readable storage medium. For example, the computer instruction can be transferred from a website, a computer, a server or a data center to another website site, computer, server or data center through wired (such as coaxial cable, optical fiber, digital subscriber line (DSL)) or wireless (such as infrared, wireless, microwave, etc.). The computer-readable storage medium can be any available medium that can be accessed by a computer or a data storage device comprising a server, a data center and the like integrated with one or more available medium. The available medium can be magnetic medium (for example, a floppy disk, a hard disk, a magnetic tape), optical medium (for example, DVD), or semiconductor medium (for example, a solid state disk (SSD)).

It should be noted that in this article, relational terms such as first and second are only to distinguish one entity or operation from another entity or operation, and do not necessarily require or imply any actual relationship or order between these entities or operations. Moreover, the terms "comprise", "contain", or any other variations thereof are intended to encompass a non exclusive inclusion, such that a process, method, item, or device that comprises a series of elements not only comprises those elements, but also other elements that are not explicitly listed, or also comprise elements inherent in such a process, method, item, or device. Without further limitations, the elements limited by the statement "comprising one..." do not exclude the existence of other identical elements in the process, method, item, or device that comprises the the elements.

The various embodiments of the present description are described in a relevant manner, and the same and similar parts between the various embodiments can be referred to each other, and each embodiment focuses on the differences from other embodiment. In particular, for the second communication method, apparatus and system, terminal, and server, computer-readable storage medium and computer program products, the description is relatively simple since it is basically similar to the embodiments of the method. Related parts please refer to the partial description of the embodiments of methods.

The above are only preferred embodiments of the present application and are not intended to limit the scope of protection of the present application. Any modifications, equivalent substitutions, improvements, etc. made within the spirit and principles of the present application should be comprised within the scope of protection of the present application.

## Claims

1. A communication method, applied to a terminal, the terminal running a client and a local service process, the method comprising steps:
sending a session authentication information request to a server after the client passes login authentication of the server, such that the server returns first session authentication information after successfully authenticating the local service process;
communicating, by the local service process, with the server based on the first session authentication information and a token maintained by itself.

2. The method according to claim 1, wherein, the step of sending the session authentication information request to the server comprises:
sending, by the local service process, the session authentication information request carrying a user name and a password to the server, such that the server returns the first session authentication information to the local service process after successfully authenticating the user name and the password.

3. The method according to claim 1, wherein, the step of sending the session authentication information request to the server comprises:
sending, by the client, the session authentication information request to the server based on second session authentication information, such that the server generates the first session authentication information after successfully verifying the second session authentication information, and returns the first session authentication information to the client, wherein the second session authentication information is session authentication information generated by the server after performing the login authentication on the client; the client communicates with the server based on the second session authentication information, and the second session authentication information is different from the first session authentication information;
after the step of sending the session authentication information request to the server, the method further comprises:
receiving, by the client, the first session authentication information returned by the server and sending the first session authentication information to the local service process.

4. The method according to claim 3, wherein, the method further comprises:
sending, by the client, a first destruction instruction to the server such that the server destroys the first session authentication information and the second session authentication information; wherein, the first destruction instruction is configured to instruct destruction of the second session authentication information; or,
sending, by the client, a second destruction instruction to the server and the local service process such that the server destroys the first session authentication information, and the local service process receives the second destruction instruction and destroys the first session authentication information, wherein the second destruction instruction is configured to instruct destruction of the first session authentication information.

5. The method according to claim 3, wherein, the method further comprises steps:
receiving, by the client, a third destruction instruction sent by the server, destroying the second session authentication information and the first session authentication information; wherein the third destruction instruction is configured to instruct destruction of the second session authentication information; or,
receiving, by the client, a fourth destruction instruction sent by the server, destroying the first session authentication information; wherein the fourth destruction instruction is configured to instruct destruction of the first session authentication information.

6. The method according to claim 5, wherein, the step of destroying the second session authentication information and the first session authentication information, comprises:
determining, based on a pre-recorded corresponding relationship between the second session authentication information and the first session authentication information, the first session authentication information corresponding to the second session authentication information instructed by the third destruction instruction, and destroying the second session authentication information and the determined first session authentication information.

7. The method according to claim 5, wherein, the first session authentication information is generated by the server after successfully verifying the second session authentication information, based on the second session authentication information according to a preset session authentication information generation rule;
the step of destroying the second session authentication information and the first session authentication information, comprises:
searching for the first session authentication information that conforms to the preset session authentication information generation rule with the second session authentication information instructed by the third destruction instruction, and destroying the second session authentication information and the searched first session authentication information.

8. The method according to any one of claims 1-7, wherein, there are multiple local service processes;
each of the local service processes communicates with the server based on different first session authentication information.

9. A communication method, applied to a server, the method comprising steps:
receiving a session authentication information request sent by a terminal, wherein the terminal runs a client and a local service process, and the session authentication information request is sent by the terminal after the client passes login authentication of the server;
sending first session authentication information to the terminal after successfully authenticating the local service process, such that the local service process communicates with the server based on the first session authentication information and a token maintained by itself.

10. The method according to claim 9, wherein, the step of receiving the session authentication information request sent by the terminal, comprises:
receiving the session authentication information request carrying a user name and a password sent by the local service process;
the step of sending the first session authentication information after successfully authenticating the local service process, comprises:
sending the first session authentication information to the local service process after successfully authenticating the user name and the password.

11. The method according to claim 9, wherein, the step of receiving the session authentication information request sent by the terminal, comprises:
receiving the session authentication information request sent by the client based on second session authentication information, wherein the second session authentication information is session authentication information generated by the server after performing the login authentication on the client; the client communicates with the server based on the second session authentication information;
the step of sending the first session authentication information to the terminal after successfully authenticating the local service process, comprises:
verifying the second session authentication information and generating the first session authentication information after successfully verifying the second session authentication information, wherein the first session authentication information is different from the second session authentication information;
sending the first session authentication information to the client, such that the client receives the first session authentication information and sends the first session authentication information to the local service process.

12. The method according to claim 11, wherein, the method further comprises steps:
receiving a first destruction instruction sent by the client; destroying the first session authentication information and the second session authentication information; wherein the first destruction instruction is configured to instruct destruction of the second session authentication information; or,
receiving a second destruction instruction sent by the client; destroying the first session authentication information; wherein the second destruction instruction is configured to instruct destruction of the first session authentication information.

13. The method according to claim 12, wherein, the step of destroying the first session authentication information and the second session authentication information, comprises:
determining, based on a pre-recorded corresponding relationship between the second session authentication information and the first session authentication information, the first session authentication information corresponding to the second session authentication information instructed by the first destruction instruction, and destroying the second session authentication information and the determined first session authentication information.

14. The method according to claim 12, wherein, the first session authentication information is generated after successfully verifying the second session authentication information, based on the second session authentication information according to a preset session authentication information generation rule;
the step of destroying the first session authentication information and the second session authentication information, comprises:
searching for the first session authentication information that conforms to the preset session authentication information generation rule with the second session authentication information instructed by the first destruction instruction, and destroying the second session authentication information and the determined first session authentication information.

15. The method according to claim 11, wherein, the method further comprises:
sending a third destruction instruction to the client, such that the client destroys the second session authentication information and the first session authentication information, wherein the third destruction instruction is configured to instruct destruction of the second session authentication information; or,
sending a fourth destruction instruction to the client, such that the client destroys the first session authentication information, wherein the fourth destruction instruction is configured to instruct destruction of the first session authentication information.

16. The method according to any one of claims 9-15, wherein, there are multiple local service processes;
the server communicates with each of the local service processes based on different first session authentication information.

17. A communication apparatus, applied to a terminal, the terminal running a client and a local service process, the apparatus comprising:
a first sending module, configured for sending a session authentication information request to a server after the client passes login authentication of the server, such that the server returns first session authentication information after successfully authenticating the local service process;
a first communication module, configured for communicating, by the local service process, with the server based on the first session authentication information and a token maintained by itself.

18. A communication apparatus, applied to a server, the apparatus comprising:
a first receiving module, configured for receiving a session authentication information request sent by a terminal, wherein the terminal runs a client and a local service process, and the session authentication information request is sent by the terminal after the client passes login authentication of the server;
a second sending module, configured for sending first session authentication information to the terminal after successfully authenticating the local service process, such that the local service process communicates with the server based on the first session authentication information and a token maintained by itself.

19. A communication system comprising a terminal and a server, the terminal running a client and a local service process, wherein:
the terminal is configured for performing steps in the method according to any one of claims 1-8;
the server is configured for performing steps in the method according to any one of claims 9-16.

20. A terminal comprising a processor, a communication interface, a memory, and a communication bus, wherein the processor, the communication interface, and the memory communicate with each other via the communication bus;
the memory is configured for storing a computer program;
the processor is configured for implementing steps in the method according to any one of claims 1-8 when executing the program stored on the memory.

21. A server comprising a processor, a communication interface, a memory, and a communication bus, wherein the processor, the communication interface, and the memory communicate with each other via the communication bus;
the memory is configured for storing a computer program;
the processor is configured for implementing steps in the method according to any one of claims 9-16 when executing the program stored on the memory.

22. A computer-readable storage medium having a computer program stored thereon, the computer program, when executed by a processor, implements steps in the method according to any one of claims 1-8 or 9-16.

23. A computer program product containing instructions, which, when running on a computer, causes the computer to implement steps in the method according to any one of claims 1-8 or 9-16.
